# EUROPÄISCHE PATENTSCHRIFT

(11) **EP 1 537 437 B1**
(45) Veröffentlichungstag und Bekanntmachung des Hinweises auf die Patenterteilung: **01.09.2010**
(21) Anmeldenummer: 03790624.5
(22) Anmeldetag: 26.05.2003
(51) Int. Cl.: G01S 7/491

(54) **ENTFERNUNGSMESSGERÄT**
DISTANCE MEASURING DEVICE
TELEMETRE

(30) Priorität: 28.08.2002 DE 10239448
(43) Veröffentlichungstag der Anmeldung: 08.06.2005
(73) Patentinhaber: ROBERT BOSCH GMBH, 70442 Stuttgart (DE)
(72) Erfinder: SCHMIDT, Dierk, 70771 Leinfelden-Echterdingen (DE); STIERLE, Joerg, 71111 Waldenbuch (DE); WOLF, Peter, 70771 Leinfelden-Echterdingen (DE)
(86) Internationale Anmeldenummer: PCT/DE2003/001686
(87) Internationale Veröffentlichungsnummer: WO 2004/021037

(56) Entgegenhaltungen:
- DE-A- 19 811 550
- US-A- 5 381 694
- US-A- 6 072 427
- US-A- 6 104 250
- US-B1- 6 384 770

## Beschreibung

### Stand der Technik

Die Erfindung geht aus von einem Entfernungsmessgerät nach dem Oberbegriff des Anspruchs 1.

Aus der DE 198 11 550 C2 ist ein gattungsbildendes Entfernungsmessgerät bekannt, bei dem aus einem einzigen Oszillator durch Teilen und Herausfiltern von Oberfrequenzen mehrere Signale mit unterschiedlicher Frequenz erzeugt werden.

Aus der US-A-6384770 ist ein Entfernungsmessgerät nach dem Oberbegriff des Anspruchs 1 bekannt, aber als Radio-Höhenmesser ausgeführt.

### Vorteile der Erfindung

Die Erfindung geht aus von einem Entfernungsmessgerät, insbesondere einem Laserentfernungsmessgerät, mit zumindest einem Oszillator zur Erzeugung eines Grundsignals einer Grundfrequenz und einer ersten Schaltungsvorrichtung zur Erzeugung eines ersten Signals mit einer gegenüber der Grundfrequenz erhöhten Frequenz. Es wird vorgeschlagen, dass die erste Schaltungsvorrichtung erfindungsgemäß zumindest eine PLL- und eine VCO-Schaltung aufweist.

Ein Entfernungsmessgerät mit einer solchen Schaltungsvorrichtung bietet den Vorteil, dass die erste Frequenz des von der Schaltungsvorrichtung erzeugten ersten Signals deutlich höher liegen kann als die Frequenz eines für die Entfernungsmessung tauglichen Signals, das durch die Filterung einer Oberschwingung und Verstärkung gewonnen werden kann. Die Anforderungen an die Phasenauflösung zur Erreichung einer bestimmten Messgenauigkeit wird somit geringer, und es ist eine höhere Genauigkeit erreichbar. Ein weiterer Vorteil liegt darin, dass die erste Frequenz digital erzeugt werden kann und dass keine durch Filterelemente bedingte Messfrequenzvorgaben zu beachten sind. Die Erfindung bietet außerdem den Vorteil, dass die Schaltungsvorrichtung ohne Filterelemente samt zugehörigem Anpassnetzwerk und Verstärkerschaltungen auskommt. Hierdurch können Kosten gespart werden.

Eine PLL-Schaltung ("Phase Locked Loop" oder "Phasenbegrenzungskreis") sowie eine VCO-Schaltung ("Voltage Controlled Oszillator" oder "Spannungsfrequenzumsetzer") sind in der Elektronik hinreichend bekannt. Eine PLL-Schaltung vergleicht die Phasenlage zweier Signale und gibt eine von der Phasenlage abhängige Spannung aus. Eine VCO-Schaltung erzeugt ein Signal mit einer Frequenz, die von der in die VCO-Schaltung eingegebenen Spannung abhängig ist. Durch die Kombination einer PLL-Schaltung mit einer VCO-Schaltung ist somit eine Schaltungsvorrichtung erreichbar, mit der eine von der VCO-Schaltung erzeugte Ausgangsfrequenz mit hoher Genauigkeit an eine Grundfrequenz angeglichen werden kann. Es sind also sehr hohe erste Frequenzen oder Ausgangsfrequenzen mit gleicher Stabilität wie die Grundfrequenz des Oszillators erreichbar, wobei Ausgangsfrequenzen über 1 GHZ möglich sind. Die gewünschte Ausgangsfrequenz der Schaltungsvorrichtung wird hierbei durch die Wahl einer geeigneten VCO-Schaltung erreicht, deren Ausgangsfrequenzbereich die gewünschte Frequenz umspannt.

Die Schaltungsvorrichtung kann direkt hinter dem Oszillator angeordnet sein, so dass der PLL-Schaltung das Grundsignal mit der Grundfrequenz zugeführt wird. Es ist jedoch auch möglich, eine oder mehrere das Grundsignal des Oszillators verändernde Schaltungen zwischen den Oszillator und die Schaltungsvorrichtung anzuordnen. So kann beispielsweise zwischen dem Oszillator und der Schaltungsvorrichtung ein Frequenzteiler angeordnet werden, der die vom Oszillator erzeugte Grundfrequenz in eine oder mehrere niedrigere Frequenzen aufteilt. Hierbei wird eine oder mehrere der niedrigeren Ausgangsfrequenzen des Frequenzteilers einer bzw. jeweils einer ersten Schaltungsvorrichtung zugeführt, die ein erstes Signal mit einer gegenüber der Grundfrequenz erhöhten ersten Frequenz erzeugt.

Zweckmäßigerweise weist die Schaltungsvorrichtung einen Frequenzteiler auf, der zur Teilung der ersten Frequenz vorgesehen ist. Hierdurch ist auf einfache Weise eine Frequenzmultiplikation möglich. Der Frequenzteiler dient zur Teilung der Ausgangsfrequenz der VCO-Schaltung, wobei das Ausgangssignal des Frequenzteilers in die PLL-Schaltung gegeben wird zum Vergleich mit dem Signal, das der PLL-Schaltung direkt oder indirekt vom Oszillator zugeführt wird. Der Frequenzteiler teilt die Ausgangsfrequenz der VCO-Schaltung vorteilhafterweise auf die gleiche Frequenz herunter, die der PLL-Schaltung direkt oder indirekt vom Oszillator zugeführt wird.

Eine besonders einfache Schaltungsvorrichtung wird durch die Integration des Frequenzteilers in die PLL-Schaltung erreicht.

In einer bevorzugten Ausgestaltung der Erfindung weist die erste Schaltungsvorrichtung einen der VCO-Schaltung nachgeschalteten LC-Filter auf. Ein solcher LC-Filter umfasst eine Induktivität (L) und eine Kapazität (C) und dient zur Verbesserung der Signalqualität, wie beispielsweise durch das Herausfiltern von durch die Schaltungsvorrichtung erzeugten Oberschwingungen. Auf diese Weise wird ein im Wesentlichen sinusförmiges Ausgangssignal der ersten Schaltungsvorrichtung erreicht, das eine Phasenbestimmung mit hoher Genauigkeit in einem späteren Messprozess zulässt.

In einer Ausführungsform der Erfindung weist das Entfernungsmessgerät ein Phasenschiebeelement zur Erzeugung eines zweiten Signals aus dem Grundsignal auf, wobei das zweite Signal eine von der Grundfrequenz verschiedene zweite Frequenz aufweist und das zweite Signal durch Weiterschalten eines Eingangssignals zwischen diskreten Phasenlagen erzeugt wird und wobei dem Phasenschiebeelement eine zweite Schaltungsvorrichtung mit einer PLL- und einer VCO-Schaltung zur Erzeugung eines dritten Signals mit einer gegenüber der zweiten Frequenz erhöhten dritten Frequenz nachgeschaltet ist. Das zweite Signal kann unmittelbar oder mittelbar aus dem Grundsignal erzeugt werden. Es ist beispielsweise möglich, zwischen dem Oszillator und dem Phasenschiebeelement ein weiteres Element, wie beispielsweise einen Frequenzteiler, anzuordnen und das Ausgangssignal dieses weiteren Elements durch das Phasenschiebeelement zu bearbeiten. Mit der zweiten Schaltungsvorrichtung wird das zweite Signal direkt oder indirekt nach einem zwischengeschalteten Signalbearbeitungselement in der Weise bearbeitet, dass ein drittes Signal mit einer dritten und hohen Frequenz erzeugt wird. Es sind somit das erste Signal mit der ersten Frequenz und das dritte Signal mit der dritten Frequenz aus dem vom Oszillator erzeugten Grundsignal abgeleitet, wodurch beide Signale auch ohne Nachregelung in einer stabilen Beziehung zueinander stehen. Hierdurch kann der Vorteil erreicht werden, dass das niederfrequente Mischprodukt aus dem ersten und dem dritten Signal ebenso stabil ist wie das Grundsignal des Oszillators und zwar völlig ohne Nachregelung. Es ist somit ein Frequenzfehler zwischen den einzelnen Signalen unterschiedlicher Frequenz ausgeschlossen, da diese alle gemeinsam auf ein Grundsignal des Oszillators zurückgehen.

Das Phasenschiebeelement erzeugt das zweite Signal beispielsweise durch synthetische, also rein digitale Frequenzverschiebung. Hierdurch werden auch nur geringe Frequenzabweichungen, die durch unterschiedliche Herkunft der Signale, beispielsweise aus mehreren Oszillatoren, bedingt sind, wirksam vermieden. Es lassen sich Frequenzpaare mit dicht benachbarten und außerdem sehr hohen Frequenzen erzielen, wobei unter dicht benachbart eine Frequenzdifferenz verstanden wird, die sich nicht durch Teilen aus einer Ausgangsfrequenz erzielen lässt.

Zweckmäßigerweise ist die erste und/oder zweite Schaltungsvorrichtung zur Vervielfältigung ihrer Eingangsfrequenz um ein ungerades Vielfaches vorgesehen. Hierdurch kann eine einfache Auswertung der Phasen von Signalen mit gegeneinander verschobenen Frequenzen erreicht werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

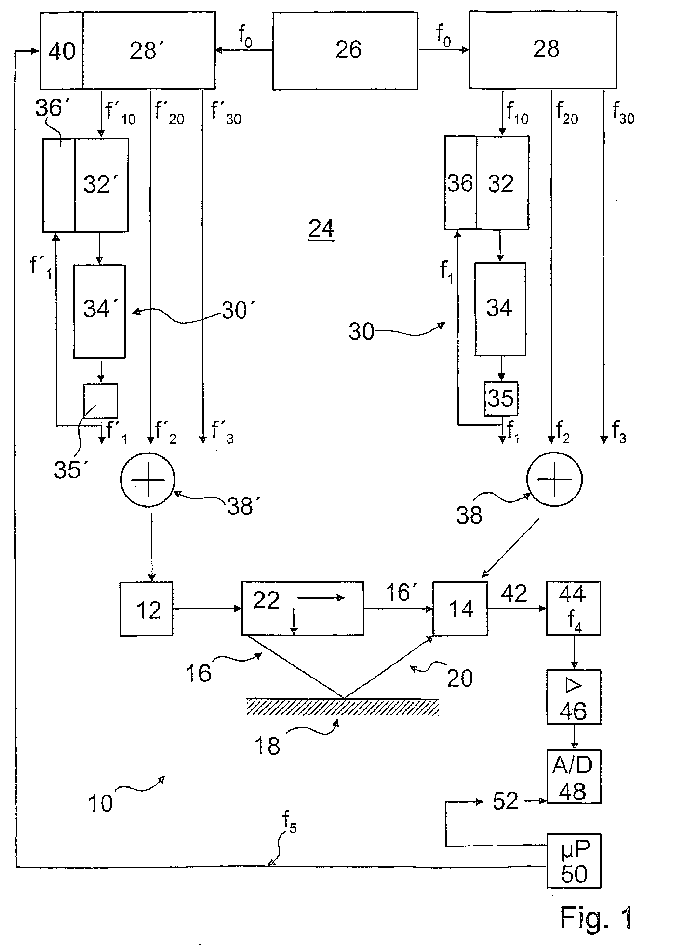

Figur 1 zeigt eine schematische Prinzipdarstellung eines Entfernungsmessgeräts, das als Laserentfernungsmessgerät ausgestaltet ist. Jedes Signal, das nicht ständig auf einem Gleichspannungswert verharrt, wird im Folgenden als mit einer Frequenz f behaftet angesehen. Das Signal kann hierbei sinusförmig, rechteckig oder nur für eine begrenzte Zeit sinusförmig bzw. rechteckig sein. Ist das Signal rechteckig, so treten neben der Grundschwingungsfrequenz f noch weitere Frequenzen, so genannte Oberschwingungen auf. Die Theorie hierzu ist aus der Mathematik bekannt und soll hier nicht näher erläutert werden.

Ist das Signal nur für eine begrenzte Zeit sinusförmig bzw. rechteckig, wie dies unter anderem bei Signalen der Fall ist, welche in ihrer Phase in regelmäßiger zeitlicher Abfolge um einen konstanten Phasenwinkel verschoben werden, so wird das Signal ebenfalls als mit einer Frequenz f behaftet bezeichnet. Der Zahlenwert f bezeichnet in diesem Fall diejenige Frequenz im Frequenzspektrum, die mit der größten Amplitude auftritt. In diesem Fall können Frequenzen auftreten, die kein Vielfaches der Frequenz f sind. Solche Frequenzen werden im Folgenden ebenfalls als Oberschwingungen bezeichnet.

Figur 1 zeigt eine Prinzipdarstellung eines mit 10 bezeichneten Entfernungsmessgeräts. Dieses umfasst einen Lichtsender 12, beispielsweise eine Laserdiode, sowie einen Lichtempfänger 14, beispielsweise eine Fotodiode. Mittels des Lichtsenders 12 wird ein kollimierter, sichtbarer Dauerstrichlaserstrahl als Sendesignal 16 erzeugt, das auf einem Objekt 18, im Folgenden auch Target genannt, sichtbar ist. Vom Objekt 18 wird das Sendesignal 16 nach den Gesetzen der Optik reflektiert und als Empfangssignal 20 von dem Lichtempfänger 14 empfangen. Dem Lichtempfänger 14 wird unmittelbar im Anschluss an die Targetmessung über einen optischen Umschalter 22, beispielsweise eine bewegliche Klappe, das Sendesignal 16 als Referenzsignal 16' zugeführt.

Zur Ansteuerung des Laserentfernungsmessgeräts 10 ist eine Schaltungsanordnung 24 vorgesehen. Diese umfasst einen Oszillator 26, der als Quarzoszillator ausgeführt ist. Der Oszillator 26 stellt eine Grundfrequenz f₀ bereit, von der alle nachfolgend noch näher erläuterten Frequenzen für den Betrieb des Entfernungsmessgeräts 10 abgeleitet werden. Um den Eindeutigkeitsbereich der Entfernungsmessung mit dem Entfernungsmessgerät 10. zu erhöhen, wird das Gerät mit insgesamt drei Modulationsfrequenzen für das Sendesignal 16 betrieben. Das Sendesignal 16 selbst ist in bekannter Weise amplitudenmoduliert. Folglich ist auch das Empfangssignal in gleicher Weise amplitudenmoduliert. Dadurch, dass der optische Umschalter 22 zu einem bekannten Zeitpunkt umgeschaltet wird, kann aufgrund der zeitlichen Abfolge eindeutig erkannt werden, ob das momentane optische Empfangssignal direkt vom optischen Umschalter 22 oder vom Objekt 18 herrührt.

Der Lichtempfänger 14 ist als bekannte Avalanche-Fotodiode ausgebildet und gestattet gleichzeitig das Mischen mehrerer Frequenzen. Der Aufbau und die Wirkungsweise einer derartigen Avalanche-Fotodiode sind bekannt, so dass im Rahmen der vorliegenden Beschreibung hierauf nicht näher eingegangen werden soll.

Dem Oszillator 26 ist ein erster umschaltbarer Frequenzteiler 28 zugeordnet, über den die vom Oszillator 26 bereitgestellte Frequenz f₀ wahlweise auf eine Frequenz f₁₀, eine Frequenz f₂₀ sowie eine Frequenz f₃₀ herunter teilbar ist. Die Frequenzen f₁₀, f₂₀, f₃₀ können dabei jeden durch Teilen der Grundfrequenz f₀ erreichbaren Wert annehmen. Auch können mindestens zwei der Frequenzen identisch sein.

Dem Frequenzteiler 28 ist eine Schaltungsvorrichtung 30 nachgeschaltet, die aus dem Signal mit der Frequenz f₁₀ ein erstes Signal mit einer gegenüber der Grundfrequenz f₀ erhöhten ersten Frequenz f₁ erzeugt. Die Schaltungsvorrichtung 30 umfasst eine PLL-Schaltung 32 und eine VCO-Schaltung 34. In die PLL-Schaltung 32 ist ein Frequenzteiler 36 integriert. Die VCO-Schaltung 34 ist ein Voltage Controlled Oszillator (Spannungsfrequenzumsetzer) und ist zur Ausgabe eines Signals mit der Frequenz f₁ oder mit einer Frequenz, die in einem Bereich um die Frequenz f₁ herum liegt, ausgelegt. Der Frequenzteiler 36 ist dazu ausgelegt, ein Signal mit der Frequenz f₁ herunter zu teilen auf ein Signal im Bereich der Frequenz f₁₀. Die PLL-Schaltung 32 ist eine Phase Lock Loop (Phasenbegrenzungskreis) und ist zum Phasenvergleich des vom Frequenzteiler 36 kommenden Signals mit dem von dem Frequenzteiler 28 kommenden Signal mit der Frequenz f₁₀ vorgesehen.

Die Schaltungsvorrichtung 30 umfasst einen LC-Filter 35, der eine Induktivität und eine Kapazität aufweist. Der LC-Filter 35 filtert von der Schaltungsvorrichtung 30 erzeugte Oberschwingungen heraus und dient zur Verbesserung der Signalqualität.

Das erste Signal mit der Frequenz f₁ sowie die beiden anderen von dem Frequenzteiler 28 ausgehenden Signale mit den Frequenzen f₂ und f₃ werden über ein Summierglied 38 auf den Lichtempfänger 14 gegeben. Hierbei entspricht die Frequenz f₂ der vom Frequenzteiler 28 ausgegebenen Frequenz f₂₀ und die Frequenz f₃ entspricht der Frequenz f₃₀. Es ist auch möglich, dass vom Frequenzteiler 28 ausgehende Signal mit der Frequenz f₂₀ oder mit der Frequenz f₃₀ über einen in Figur 1 nicht gezeigten Bandpassfilter und/oder einen ebenfalls nicht gezeigten Verstärker zu führen, so dass die Frequenz f₂ oder die Frequenz f₃ nicht unbedingt der Frequenz f₂₀ bzw. f₃₀ entsprechen muss. Es ist auch möglich, die Schaltungsvorrichtung 30 direkt dem Oszillator 26 nachzuordnen, so dass das Grundsignal mit der Grundfrequenz f₀ als Eingangssignal für die PLL-Schaltung 32 verwendet wird.

Dem Oszillator 26 ist ein zweiter umschaltbarer Frequenzteiler 28' zugeordnet. Der Frequenzteiler 28' umfasst eine digitale Schaltungsanordnung, die als Phasenschiebeelement 40 ausgestaltet ist. An die Ausgänge des Frequenzteilers 28' sind Signale mit den Frequenzen f'₁₀, f'₂₀ und f'₃₀ legbar. Diese Frequenzen werden durch das Phasenschiebeelement 40 mit einer Frequenz f₅ in ihrer Phase weitergeschaltet. Dadurch entsteht im Frequenzspektrum ein Gemisch aus mehreren Frequenzlinien. Es können mindestens zwei der Frequenzen f'₁₀, f'₂₀ und f'₃₀ identisch sein.

Die Schaltungsvorrichtung 30' umfasst eine PLL-Schaltung 32' und eine VCO-Schaltung 34'. In die PLL-Schaltung 32' ist ein Frequenzteiler 36' integriert. Die VCO-Schaltung 34' ist zur Ausgabe eines Signals mit der Frequenz f'₁ oder mit einer Frequenz, die in einem Bereich um die Frequenz f'₁ herum liegt, ausgelegt. Der Frequenzteiler 36' ist dazu ausgelegt, ein Signal mit der Frequenz f'₁ herunter zu teilen auf ein Signal im Bereich der Frequenz f'₁₀. Die PLL-Schaltung 32' ist zum Phasenvergleich des vom Frequenzteiler 36' kommenden Signals mit dem von dem Frequenzteiler 28' kommenden Signal mit der Frequenz f'₁₀ vorgesehen. Jedes Mal, wenn das Phasenschiebeelement 40 die Phase des Signals mit der Frequenz f'₁₀ etwas verschiebt, schwingt sich die PLL-Schaltung 32' in Verbindung mit der VCO-Schaltung 34' wieder ein, bis das vom Frequenzteiler 36' kommende Signal mit der Frequenz f'₁₀ wieder die gleiche Phasenlage hat wie das vom Frequenzteiler 28' kommende Signal mit der Frequenz f'₁₀. In analoger Weise zur Schaltungsvorrichtung 30 umfasst die Schaltungsvorrichtung 30' ebenfalls einen LC-Filter 35', der eine Induktivität und eine Kapazität aufweist.

Der Lichtempfänger 14 wird in zeitlich hintereinander liegender Abfolge mit folgenden unter A aufgelisteten optischen Signalen und zu jedem optischen Signal gleichzeitig mit dem unter B genannten elektrischen Signal beaufschlagt:

| Liste A | Liste B |
|---|---|
| Optische Signale: | Zugehörige elektrische Signale: |
| Targetsignal 20 der Frequenz f'₁ | Mischsignal der Frequenz f₁ |
| Targetsignal 20 der Frequenz f'₂ | Mischsignal der Frequenz f₂ |
| Targetsignal 20 der Frequenz f'₃ | Mischsignal der Frequenz f₃ |
| Referenzsignal 16' der Frequenz f'₁ | Mischsignal der Frequenz f₁ |
| Referenzsignal 16' der Frequenz f₂ | Mischsignal der Frequenz f₂ |
| Referenzsignal 16' der Frequenz f'₃ | Mischsignal der Frequenz f₃. |

Hierdurch erfolgt in bekannter Weise eine Transformation durch Mischen auf ein Auswertesignal 42. Dieses Auswertesignal 42 enthält die benötigte Grundinformation, nämlich den Phasenwinkel des Targetsignals 20 in Bezug auf einen A/D-Wandlertakt 52 einerseits und zeitlich nachfolgend den Phasenwinkel des Referenzsignals 16' in Bezug auf den A/D-Wandlertakt 52 andererseits. Durch Differenzbildung beider Phasenwinkel pro Messfrequenz fällt die Bezugsgröße heraus, da sie in allen nacheinander folgenden Messungen unverändert ist. Als Ergebnis ergibt sich ein Phasenwinkel pro Messfrequenzpaar f'₁-f₁, f'₂-f₂ und f'₃-f₃, insgesamt also drei Phasenwinkel. Die kleinste Frequenz der Frequenzen f'₁, f'₂ und f'₃ bestimmt den Eindeutigkeitsbereich der gesamten Entfernungsmessung. Die größte Frequenz der Frequenzen f'₁, f'₂ und f'₃ bestimmt die maximal mögliche Messgenauigkeit bei gegebener Messzeit. Die zwischen größter und kleinster Frequenz liegende Frequenz aus f'₁, f'₂ und f'₃ ist prinzipiell nicht erforderlich. Sie wird jedoch vorteilhaft verwendet, wenn die Messgenauigkeit der kleinsten Frequenz nicht ausreicht, um das Messergebnis der größten Frequenz in den jeweils korrekten Bereich einzuordnen. Letzteres ist notwendig, um Entfernungen, die größer als der Eindeutigkeitsbereich der höchsten Frequenz sind, messen zu können.

Die Frequenz f₃ ist relativ klein gewählt, um einen langsamen A/D-Wandler mit hoher Auflösung einzusetzen. Das Auswertesignal 42 wird über einen Anti-Alising Filter 44, der einen Bandpassfilter für das Auswertesignal der Frequenz f₄ bildet, geführt und von diesem in einen Verstärker 46 auf einen Analog-Digitalwandler 48 geleitet. Das gewandelte Auswertesignal 42 wird einem Mikroprozessor 50 zugeführt, der entsprechende Rechenwerke, Speicherwerke, Zählwerke usw. zur Bestimmung der Entfernung des Objekts 18 vom Entfernungsmessgerät 10 aufweist. Über den Mikroprozessor 50 wird gleichzeitig der A/D-Wandlertakt 52 zur Ansteuerung des Analog-Digitalwandlers 48 bereitgestellt. Ferner wird ein zu dem A/D-Wandlertakt 52 in zumindest teilweise festem Verhältnis stehendes Frequenzsignal f₅ (Triggersignal) des Mikroprozessors 50 zur Verschiebung der Frequenzen f₁₀, f₂₀ und f₃₀ zu den Frequenzen f'₁₀, f'₂₀ und f'₃₀ ausgenutzt.

Im Ausführungsbeispiel wird angenommen, dass der Oszillator 26 ein Grundsignal mit der Grundfrequenz f₀ = 60 MHz erzeugt. Der Frequenzteiler 28 teilt die Grundfrequenz f₀ in die Frequenz f₁₀ = 30 MHz, die Frequenz f₂₀ = 15 MHz und die Frequenz f₃₀ = 1,875 MHz. Die Frequenzen f₂₀ und f₃₀ werden unverändert als Frequenzen f₂ = 15 MHz und f₃ = 1,875 MHz auf das Summierglied 38 gegeben. Das Signal mit der Frequenz f₁₀ wird in die PLL-Schaltung 32 eingegeben. Die Phasenlage dieses Signals wird mit der Phasenlage eines aus dem Frequenzteiler 36 stammenden Signals verglichen, wobei der Vergleich der Phasen der beiden Signale in eine Ausgangsspannung der PLL-Schaltung 32 umgewandelt wird. Diese Spannung dient als Eingangsgröße für die VCO-Schaltung 34, die daraus ein Signal mit der Frequenz f₁ = 900 MHz erzeugt. Das Signal mit der Frequenz f₁ wird in den Frequenzteiler 36 eingespeist, der die Frequenz f₁ des Signals herunterteilt auf die Frequenz f₁₀. Durch den Phasenvergleich der beiden von den Frequenzteilern 28 und 36 stammenden Signalen mit der Frequenz f₁₀ und der daraus resultierenden Ausgangsspannung der PLL-Schaltung 32 wird die VCO-Schaltung 34 so angesteuert, dass das von ihr ausgegebene Signal mit der Frequenz f₁ die gleiche Stabilität und Genauigkeit aufweist wie das Grundsignal mit der Grundfrequenz f₀ des Oszillators 26.

Der zweite dem Oszillator 26 zugeordnete Frequenzteiler 28' teilt die Grundfrequenz f₀ von 60 MHz in analoger Weise wie der Frequenzteiler 28 in Signale mit den Frequenzen f'₁₀, f'₂₀ und f'₃₀ herunter, wobei die Frequenzen f'₁₀, f'₂₀ und f'₃₀ gegenüber den Frequenzen f₁₀, f₂₀ und f₃₀ um die Frequenz f₄ digital verschoben sind. Die Frequenz f₄ beträgt 2,929 kHz, so dass die Frequenz f'₁, die in analoger Weise gewonnen wird wie die Frequenz f₁, 899,997 MHz beträgt. Die Frequenz f'₂ beträgt 29,997 MHz und die Frequenz f'₃ beträgt 1,872 MHz. Sämtliche Frequenzen werden mit Hilfe des Triggersignals der Frequenz f₅ des Mikroprozessors 50 digital erzeugt. Im Ausführungsbeispiel wird angenommen, dass das Triggersignal f₅ bei der Frequenz f₁ = 900 MHz und der Frequenz f₂ = 15 MHz genau die 4-fache Frequenz von f₄ aufweist. Bei jedem Takt des Triggersignals mit der Frequenz f₅ = 11,716 kHz wird die Phase des Signals mit der Frequenz f₁ bzw. f₂ um 90° verschoben, so dass eine Verschiebung von 360° mit der Frequenz f₄ = 2,929 kHz geschieht. Bei der Frequenz f₃ = 1,875 MHz weist das Triggersignal f₅ die 32-fache Frequenz von f₄ auf. Die in diesem Ausführungsbeispiel erwähnten Frequenzen sind nur beispielhaft genannt. In weiteren Ausführungsbeispielen sind selbstverständlich auch andere Frequenzen möglich.

### Bezugszeichen

- 10: Entfernungsmessgerät
- 12: Lichtsender
- 14: Lichtempfänger
- 16: Sendesignal
- 16': Referenzsignal
- 18: Objekt
- 20: Empfangssignal
- 22: Umschalter
- 24: Schaltungsanordnung
- 26: Oszillator
- 28: Frequenzteiler
- 28': Frequenzteiler
- 30: Schaltungsvorrichtung
- 30': Schaltungsvorrichtung
- 32: PLL-Schaltung
- 32': PLL-Schaltung
- 34: VCO-Schaltung

- 34': VCO-Schaltung
- 35: LC-Filter
- 35': LC-Filter
- 36: Frequenzteiler
- 36': Frequenzteiler
- 38: Summierglied
- 38': Summierglied
- 40: Phasenschiebeelement
- 42: Auswertesignal
- 44: Anti-Aliasing-Filter
- 46: Verstärker
- 48: A/D-Wandler
- 50: Mikroprozessor
- 52: A/D-Wandlertakt

## Patentansprüche

1. Entfernungsmessgerät, insbesondere Laserentfernungsmessgerät, mit zumindest einem Oszillator (26) zur Erzeugung eines Grundsignals einer Grundfrequenz (f₀) und einer ersten Schaltungsvorrichtung (30) zur Erzeugung eines ersten Signals mit einer gegenüber der Grundfrequenz (f₀) erhöhten ersten Frequenz (f₁),
**dadurch gekennzeichnet, dass** die erste Schaltungsvorrichtung (30) zumindest eine PLL-Schaltung (32) und eine VCO-Schaltung (34) aufweist und dass ein Phasenschiebeelement (40) zur Erzeugung eines zweiten Signals aus dem Grundsignal mit einer von der Grundfrequenz (f₀) verschiedenen zweiten Frequenz durch Weiterschalten eines Eingangssignals zwischen diskreten Phasenlagen vorgesehen ist, wobei dem Phasenschiebeelement (40) eine zweite Schaltungsvorrichtung (30') mit einer PLL-Schaltung (32') und einer VCO-Schaltung (34') zur Erzeugung eines dritten Signals mit einer gegenüber der zweiten Frequenz erhöhten dritten Frequenz (f'₁) nachgeschaltet ist.

2. Entfernungsmessgerät nach Anspruch 1,
**dadurch gekennzeichnet, dass** die erste Schaltungsvorrichtung (30) einen der VCO-Schaltung (34) nachgeschalteten LC-Filter (35) aufweist.

3. Entfernungsmessgerät nach Anspruch 1 oder 2,
**gekennzeichnet durch** einen in der PLL-Schaltung (32) integrierten Frequenzteiler (36).

4. Entfernungsmessgerät nach einem der vorhergehenden Ansprüche, **dadurch gekennzeichnet, dass** die Schaltungsvorrichtung (30, 30') zur Vervielfältigung ihrer Eingangsfrequenz um ein ungerades Vielfaches vorgesehen ist.

## Claims

1. Distance measuring device, in particular laser distance measuring device, having at least one oscillator (26) for generating a fundamental signal at a fundamental frequency (f₀) and a first circuit apparatus (30) for generating a first signal at a first frequency (f₁) which is higher than the fundamental frequency (f₀),
**characterized in that** the first circuit apparatus (30) has at least one PLL circuit (32) and a VCO circuit (34), and **in that** a phase shifting element (40) is provided for the purpose of generating a second signal from the fundamental signal at a second frequency, which differs from the fundamental frequency (f₀), by relaying an input signal between discrete phase angles, a second circuit apparatus (30') having a PLL circuit (32') and a VCO circuit (34') for generating a third signal at a third frequency (f'₁) , which is higher than the second frequency, being connected downstream of the phase shifting element (40).

2. Distance measuring device according to Claim 1,
**characterized in that** the first circuit apparatus (30) has an LC filter (35) connected downstream of the VCO circuit (34).

3. Distance measuring device according to Claim 1 or 2,
**characterized by** a frequency divider (36) integrated in the PLL circuit (32).

4. Distance measuring device according to one of the preceding claims, **characterized in that** the circuit apparatus (30, 30') is provided for the purpose of multiplying its input frequency by an uneven multiple.

## Revendications

1. Appareil de mesure de distance, en particulier appareil de mesure de distance par laser, qui présente
au moins un oscillateur (26) qui forme un signal de base à une fréquence de base (f₀) et un premier dispositif de commutation (30) qui forme un premier signal dont la première fréquence (f₁) est supérieure à la fréquence de base (f₀),
**caractérisé en ce que**
le premier dispositif de commutation (30) présente au moins un circuit PLL (32) et un circuit VCO (34),
**en ce qu'**il présente un élément de déphasage (40) qui forme un deuxième signal à partir du signal de base à une deuxième fréquence différente de la fréquence de base (f₀) par injection d'un signal d'entrée entre des phases distinctes et
**en ce que** l'élément de déphasage (40) est suivi par un deuxième dispositif de commutation (30') qui présente un circuit PLL (32') et un circuit VCO (34') qui forme un troisième signal dont la troisième fréquence (f'₁) est supérieure à la deuxième fréquence.

2. Appareil de mesure de distance selon la revendication 1, **caractérisé en ce que** le premier circuit de commutation (30) présente un filtre LC (35) qui suit le circuit VCO (34).

3. Appareil de mesure de distance selon les revendications 1 ou 2, **caractérisé par** un diviseur de fréquence (36) intégré dans le circuit PLL (32).

4. Appareil de mesure de distance selon l'une des revendications précédentes, **caractérisé en ce que** le dispositif de commutation (30, 30') est prévu pour multiplier sa fréquence d'entrée par un multiplicateur impair.
